# EUROPÄISCHE PATENTSCHRIFT

(11) **EP 0 813 459 B1**
(45) Veröffentlichungstag und Bekanntmachung des Hinweises auf die Patenterteilung: **02.07.2003**
(21) Anmeldenummer: 96904056.7
(22) Anmeldetag: 10.02.1996
(51) Int. Cl.: B23B 51/02

(54) **BOHRWERKZEUG**
DRILLING TOOL
OUTIL DE FORAGE

(30) Priorität: 03.03.1995 DE 19507469
(43) Veröffentlichungstag der Anmeldung: 29.12.1997
(73) Patentinhaber: KOMET Präzisionswerkzeuge Robert Breuning GmbH, D-74354 Besigheim (DE)
(72) Erfinder: SCHEER, Gerhard, D-74369 Löchgau (DE)
(74) Vertreter: Wolf, Eckhard, Dr.-Ing.
(86) Internationale Anmeldenummer: EP9600570
(87) Internationale Veröffentlichungsnummer: WO96027469

(56) Entgegenhaltungen:
- EP-A- 0 088 505
- EP-A- 0 132 149
- EP-A- 0 358 901
- DE-A- 3 709 878
- DE-A- 3 730 378
- DE-A- 4 301 261
- FR-A- 2 200 077
- FR-A- 2 295 810
- US-A- 5 399 051

## Beschreibung

Die Erfindung betrifft ein Bohrwerkzeug mit einer Bohrerspitze, die zwei etwa gleiche Umfangsabstände voneinander aufweisende Hauptschneiden und zwei an die Hauptschneiden angrenzende Spanflächen und Hauptfreiflächen aufweist, mit einem an die Bohrerspitze axial anschließenden, gegebenenfalls als Schneidteil ausgebildeten Spanabfuhrteil, mit einem an dem der Bohrerspitze gegenüberliegenden Ende des Spanabfuhrteils angeordneten Bohrerschaft und mit zwei sich von den Hauptschneiden der Bohrerspitze aus wendelförmig über den Spanabfuhrteil erstreckenden Spannuten , wobei der Spanabfuhrteil aus einem mit dem Bohrerschaft einstückig verbundenen Grundkörper und einer mit der Bohrerspitze einstückig verbundenen Wechselspitze besteht, die an einer axialen Trennstelle form- und/oder kraftschlüssig miteinander verbindbar sind, und wobei die Wechselspitze in ihrer Gesamtheit aus einem härteren Werkstoff als der Grundkörper besteht, wobei die Wechselspitze mit einem nach der der Hauptfreifläche gegenüberliegenden Seite überstehenden Kupplungsteil einstückig verbunden ist, und das Kupplungsteil mindestens zwei über den Umfang verteilt angeordnete, teilzylindrisch konvexe Zentrierabschnitte aufweist, die in eine grundkörperseitige Aufnahme mit zu den konvexen Zentrierabschnitten komplementären, teilzylindrisch konkaven Zentrierabschnitten paßgenau eingreifen.

Der Spiralbohrer ist das meist verwendete Bohrwerkzeug zum Bohren ins Volle für Bohrungen bis etwa 18 mm Durchmesser. Als Werkstoff für Spiralbohrer werden legierter Werkzeugstahl, Schnellarbeitsstahl und Hartmetall verwendet. Erforderlichenfalls kann der Bohrer mit einer verschleißmindernden Schicht beispielsweise aus Titannitrit versehen werden. Der Bohrerverschleiß tritt vor allem in der Nähe der Bohrerspitze im Bereich der Hauptschneide und an der Führungsfase auf. Zur Beseitigung des Verschleißes ist es bekannt, den Bohrer an den jeweiligen Freiflächen nachzuschleifen. Als nachteilig wird dabei empfunden, daß der Bohrer beim Nachschleifen kürzer wird. Um diesen Nachteil zu vermeiden, ist es bei einem Bohrwerkzeug der eingangs angegebenen Art bekannt (DE-C-3709878), daß der Schneidteil aus einem mit dem Bohrerschaft einstückig verbundenen Grundkörper und einer mit der Bohrerspitze einstückig verbundenen Wechselspitze besteht, die an einer axialen Trennstelle form- und kraftschlüssig miteinander verbindbar sind.

Der Erfindung liegt die Aufgabe zugrunde, das bekannte Bohrwerkzeug der eingangs angegebenen Art dahingehend zu verbessern, daß mit herstellungstechnisch einfachen Mitteln eine hohe Festigkeit der Verbindung und eine exakte Zentrierung der Wechselspitze am Grundkörper erzielt werden kann.

Zur Lösung dieser Aufgabe wird gemäß der Erfindung die im Anspruch 1 angegebene Merkmalskombination vorgeschlagen. Vorteilhafte Ausgestaltungen und Weiterbildungen der Erfindung ergeben sich aus den abhängigen Ansprüchen.

Gemäß der Erfindung wird vorgeschlagen, daß das Kupplungsteil einen mit einem komplementären Mitnehmerteil des Grundkörpers kämmenden Drehmitnehmer aufweist. Vorteilhafterweise weist der Drehmitnehmer mindestens eine zwischen zwei benachbarten konvexen Zentrierabschnitten des Kupplungsteils angeordnete, axial offene Radialausnehmung für den Eingriff eines das Mitnehmerteil bildenden, zwischen zwei benachbarten konkaven Zentrierabschnitten des Grundkörpers radial in die Aufnahme überstehenden Mitnehmerzahn auf. Dadurch wird eine exakte Zentrierung der Wechselspitze am Grundkörper und damit eine Verbesserung der Bohrqualität erzielt.

Vorteilhafterweise besteht die Wechselspitze in ihrer Gesamtheit zweckmäßig aus einem Schneidstoff aus der Gruppe Hartmetall oder Keramik und kann in diesem Falle als gesintertes Pulverspritzgußteil ausgebildet sein, Grundsätzlich kann die Wechselspitze auch aus einem verschleißfest beschichteten Werkzeugstahl hergestellt werden. Der Grundkörper besteht andererseits zweckmäßig aus Werkzeugstahl oder einem Schnellarbeitsstahl.

Eine bevorzugte Ausgestaltung der Erfindung sieht vor, daß die Hauptschneiden jeweils zwei in die Wechselspitze eingeformte, paarweise dachförmig gegeneinander angestellte, im wesentlichen radial ausgerichtete Schneidkanten aufweisen. Dabei können die Schneidkanten der beiden Hauptschneiden unter Bildung eines Doppelschneiders in gleichem Radialabstand von der Bohrerachse angeordnet werden, so daß sie beim Bohrvorgang über ihre gesamte Länge gleichzeitig im Eingriff stehen. Allerdings ist es hierbei zweckmäßig, wenn nur eine der beiden inneren Schneidkanten die Bohrerachse übergreift. An Ihren radial über den Außenumfang der Bohrerspitze überstehenden Schneidkantenecken gehen die Schneidkanten vorteilhafterweise in eine Führungskante über, an die in Umfangsrichtung eine sich über einen Teilumfang der Bohrerspitze erstreckende, radial über den Außenumfang der Bohrerspitze überstehende Führungsrippe angrenzt. Dabei sind die Dachspitze und die nach außen überstehenden Schneidkantenecken der beiden Hauptschneiden im Falle des Doppelschneiders in gleichen Radialabständen von der Bohrerachse angeordnet. Dementsprechend sind die äußeren Schneidkanten der beiden Hauptschneiden gleich lang ausgebildet, während die inneren Schneidkanten unterschiedlich lang sind. Eine bevorzugte Ausgestaltung der Erfindung sieht vor, daß die Schneidkanten mit einer senkrecht zur Bohrerachse ausgerichteten Ebene einen Winkel von 2° bis 30°, vorzugsweise 8° bis 16° einschließen, so daß die Schneidkanten der Hauptschneiden paarweise einen Dachwinkel von 120° bis 176°, vorzugsweise von 148° bis 164° einschließen.

Die in die Wechselspitze eingeformten Schneidkanten können zumindest partiell angefast und/oder verrundet und gegebenenfalls wellenförmig ausgebildet sein. Weiter können in die Spanflächen vorzugsweise bis zu den Schneidkanten reichende Eindellungen, Erhöhungen, Stufen, Rippen eingeformt werden. Für die Spanbildung besonders günstig ist es, wenn in die Spanflächen Spanformmulden eingeformt sind, die vorzugsweise im axialen Abstand von den Schneidkanten angeordnet sind. Die Spanformmulden können dabei zumindest an ihren schneidkantenseitigen Rändern einen der Dachform der Schneidkanten angepaßten Randverlauf aufweisen. Die im wesentlichen achsparallelen, radial ausgerichteten Spanflächen begrenzen eine in Spanablaufrichtung in die Spanfördemuten mündenden Spanraum.

Für die kraftschlüssige Verbindung zwischen Wechselspitze und Grundkörper ist es von Vorteil, wenn die Wechselspitze eine im wesentlichen radial über das Kupplungsteil überstehende plane Schulterfläche aufweist, die vorzugsweise mittels eines Spannmechanismus gegen eine plane Stirnfläche des Grundkörpers anpreßbar ist. Die Schulter- und Stirnflächen sind dabei zweckmäßig in je zwei durch die Spannuten in Umfangsrichtung voneinander getrennte Flächenpartien unterteilt. Eine weitere Verbesserung in dieser Hinsicht kann dadurch erzielt werden, daß das Kupplungsteil eine im wesentlichen radial über den Verankerungszapfen überstehende freie Schulterfläche aufweist, die vorzugsweise mittels eines Spannmechanismus gegen eine die Aufnahme begrenzende Bodenfläche anpreßbar ist.

Zur Herstellung einer form- und kraftschlüssigen Verbindung zwischen der Wechselspitze und dem Grundkörper ist vorteilhafterweise in dem Kupplungsteil mindestens eine im wesentlichen radial ausgerichtete, konische Senkung angeordnet, in die ein in einer grundkörperfesten radialen Gewindebohrung angeordneter Gewindestift mit einer Kegelspitze form- und kraftschlüssig eingreift. Die Senkung ist dabei zweckmäßig in einen Drehmitnehmer des Kupplungsteils eingeformt, während die Gewindebohrung einen der Mitnehmerteile des Grundkörpers durchdringt.

Eine weitere Verbindungsvariante zwischen Wechselspitze und Grundkörper sieht vor, daß das Kupplungsteil der Wechselspitze eine durchgehende Querbohrung aufweist, durch die eine durch eine Durchgangsbohrung des einen Mitnehmerteils hindurchgeführte und in eine Gewindebohrung des gegenüberliegenden Mitnehmerteils eingedrehte Spannschraube unter Erzeugung einer in axialer Richtung und in Umfangsrichtung spielfreien Verspannung zwischen Wechselspitze und Grundkörper hindurchgreift.

Vor allem bei Bohrwerkzeugen mit sehr kleinem Durchmesser, bei denen eine mechanische Verbindung zwischen Wechselspitze und Grundkörper problematisch ist, sind die Wechselspitze und der Grundkörper an ihren zwischen Kupplungsteil und Aufnahme angeordneten Fügestellen zweckmäßig miteinander laserverschweißt oder hartverlötet.

Zur Verbesserung des Bohrergebnisses kann mindestens eine den Grundkörper und die Wechselspitze axial oder spiralig durchdringende, die Trennstelle überbrückende Kühlmittelbohrung vorgesehen werden.

Um die Lagerhaltung zu reduzieren, können auf einen Grundkörper mit gegebenem Außendurchmesser auch Wechselspitzen mit hiervon abweichendem Außendurchmesser aufgesteckt werden.

Im folgenden wird die Erfindung anhand einiger in der Zeichnung in schematischer Weise dargestellter Ausführungsbeispiele näher erläutert. Es zeigen
- Fig. 1a: eine Seitenansicht eines Bohrwerkzeugs mit Wechselspitze in schaubildlicher Explosionsdarstellung;
- Fig. 1b bis e: die Wechselspitze nach Fig. 1a in verschiedenen perspektivischen Ansichten;
- Fig. 1f: eine ausschnittsweise vergrößerte Darstellung des Grundkörpers des Bohrwerkzeugs nach Fig. 1a;
- Fig. 2: ein gegenüber Fig. 1 abgewandeltes Ausführungsbeispiel einer Wechselspitze in einer perspektivischen Darstellung entsprechend Fig. 1d;
- Fig. 3a und b: ein weiteres gegenüber Fig. 1 abgewandeltes Ausführungsbeispiel einer Wechselspitze in zwei perspektivischen Darstellungen;
- Fig. 3c: eine ausschnittsweise Darstellung des Grundkörpers für die Wechselspitze nach Fig. 3a und b;
- Fig. 4a: eine schaubildliche Explosionsdarstellung eines weiteren abgewandelten Ausführungsbeispiels eines Bohrwerkzeugs mit Wechselspitze;
- Fig. 4b: eine Stirnseitenansicht des Grundkörpers des Bohrwerkzeugs nach Fig. 4a,
- Fig. 5a: eine Seitenansicht eines Spiralbohrers mit Wechselspitze;
- Fig. 5b: eine Draufsicht auf die Bohrerspitze in gegenüber Fig. 1a vergrößerter Darstellung;

Die in der Zeichnung dargestellten Bohrwerkzeuge sind an einer Trennstelle 30 zweigeteilt und bestehen aus einem einen Bohrerschaft 14 tragenden Grundkörper 32 und einer eine Bohrerspitze 10 tragenden Wechselspitze 34, die an der Trennstelle 30 form- und kraftschlüssig miteinander verbindbar sind. Während der Grundkörper 32 aus Werkzeugstahl oder einem Schnellarbeitsstahl besteht, ist die Wechselspitze in ihrer Gesamtheit als Formteil aus einem Schneidstoff aus der Gruppe Hartmetall oder Keramik gebildet, das als gesintertes Pulverspritzgußteil hergestellt ist. Grundsätzlich ist es auch möglich, die Wechselspitze aus einem verschleißfest beschichteten Werkzeugstahl herzustellen.

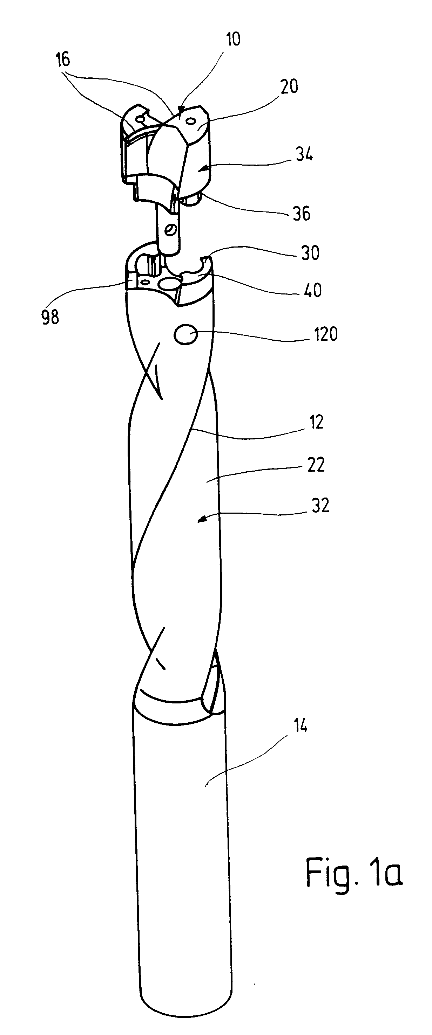

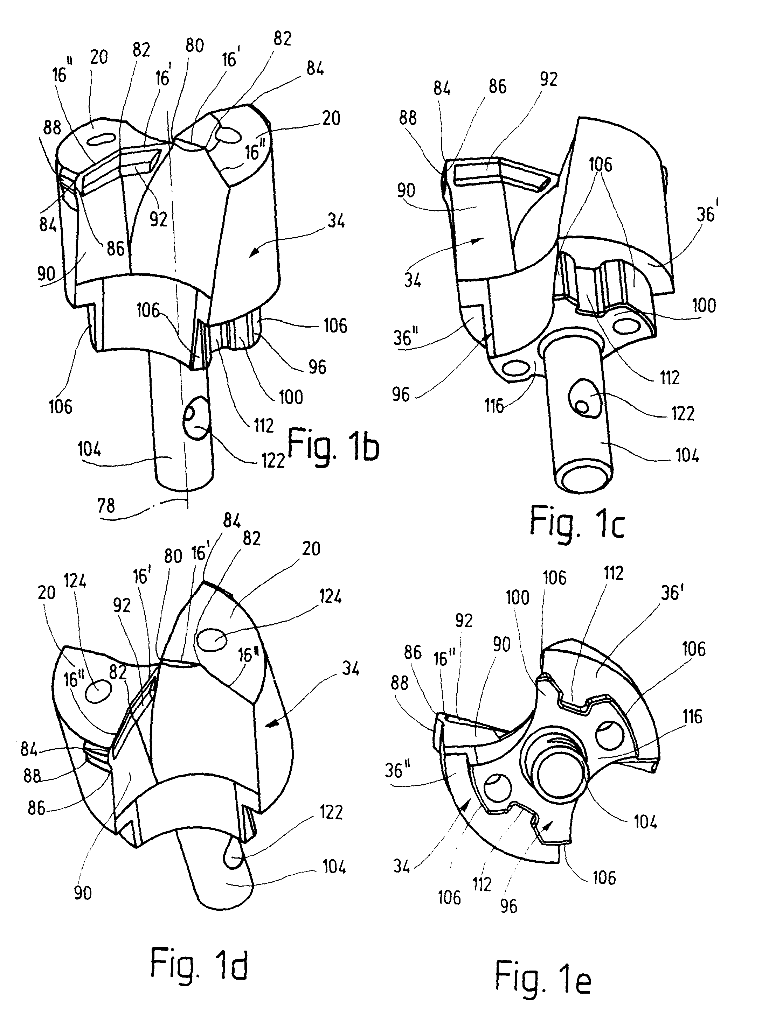

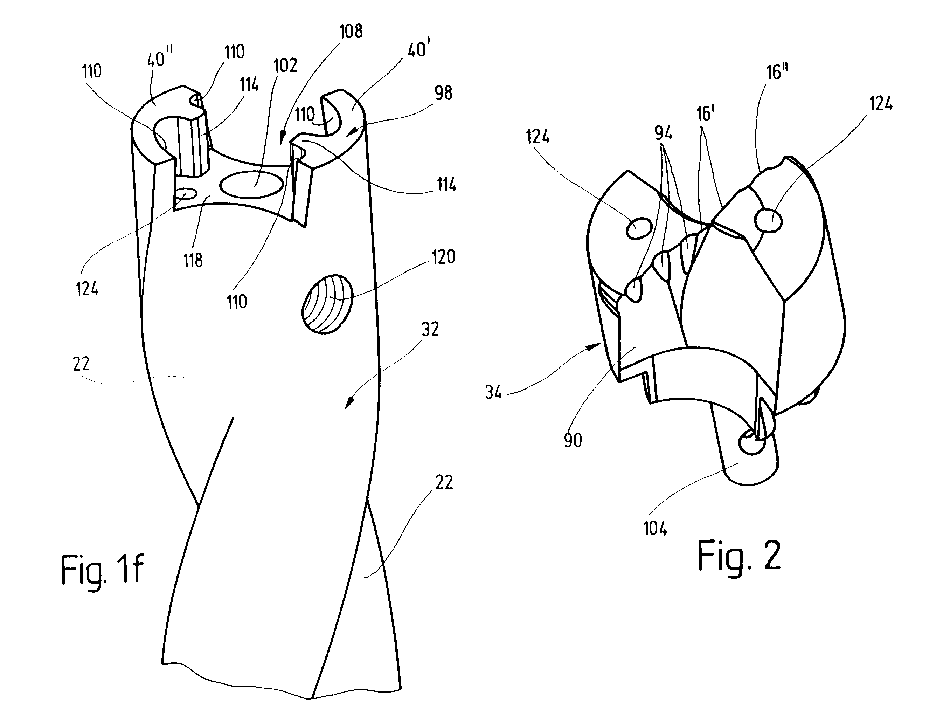

Das in den Fig. 1 bis 4 gezeigte Bohrwerkzeug weist eine Bohrerspitze 10, einen an die Bohrerspitze anschließenden, gegebenenfalls als Schneidteil ausgebildeten Spanabfuhrteil 12 und einen rückwärtig am Spanabfuhrteil angeformten Bohrerschaft 14 auf. Die Bohrerspitze 10 enthält zwei Hauptschneiden 16 und zwei an die Hauptschneiden anschließende Hauptfreiflächen 20. Von den Hauptschneiden 16 in der Bohrerspitze 10 aus erstrecken sich über den Spanabfuhrteil 12 zwei spiralige Spannuten 22, die bis zum Bohrerschaft reichen. Die Trennstelle 30 befindet sich im Bereich des Spanabfuhrteils 12.

Die Hauptschneiden 16 weisen jeweils zwei in die Wechselspitze 34 eingeformte, paarweise dachförmig gegeneinander angestellte, im wesentlichen radial ausgerichtete Schneidkanten 16',16" auf, die unter Bildung eines Doppelschneiders in gleichem Radialabstand von der Bohrerachse 78 angeordnet sind. Wie insbesondere aus Fig. 1b und d zu ersehen ist, übergreift nur eine der inneren Schneidkanten 16' die Bohrerachse 78, während die andere innere Schneidkante 16' sich außermittig an einer Stufe 80 an diese anschließt. Die Dachspitze 82 und die nach außen überstehenden Schneidkantenecken 84 der beiden Hauptschneiden 16 sind in gleichen Radialabständen von der Bohrerachse angeordnet. Dementsprechend sind die äußeren Schneidkanten 16" gleich lang und die inneren Schneidkanten 16' unterschiedlich lang ausgebildet. An der Dachspitze schließen die Schneidkanten 16',16" paarweise einen Dachwinkel von 148° bis 164° ein. Sie sorgen dafür, daß die Bohrerspitze beim Bohrvorgang im Bohrloch zentriert und nicht seitlich abgedrängt wird.

Die radial über den Außenumfang der Bohrerspitze überstehenden Schneidkantenecken 84 gehen in eine Führungskante 86 über, an die in Umfangsrichtung eine sich über einen Teilumfang der Bohrerspitze 10 erstreckende, radial über den Außenumfang überstehende Führungsrippe 88 angrenzt.

Die in Spanablaufrichtung unmittelbar hinter den Hauptschneiden 16 beginnenden Spannuten 22 sind auf der Seite der Schneidkanten 16',16" durch die Spanfläche 90 begrenzt. Im Falle der Fig. 1a bis e sind im Abstand von den Schneidkanten 16',16" Spanformmulden 92 eingeformt, die an ihren schneidkantenseitigen Rändern eine der Dachform der Schneidkanten 16',16" angepaßten Randverlauf aufweisen. Bei der in Fig. 2 gezeigten Ausführungsvariante sind anstelle der Spanformmulden mehrere, die Schneidkanten 16',16" durchdringende Eindellungen 94 vorgesehen.

An ihrer den Hauptfreiflächen 20 gegenüberliegenden Seite ist die Wechselspitze mit einem Kupplungsteil 96 versehen, das einen mit einem komplementären Zentrier- und Mitnehmerteil 98 des Grundkörpers 32 kämmenden Drehmitnehmer 100 aufweist. Bei den Ausführungsbeispielen nach Fig. 1 und 2 ist zusätzlich ein achszentral überstehender, in eine Aufnahmebohrung 102 des Grundkörpers 32 einführbarer und dort form- und kraftschlüssig verankerbarer Verankerungszapfen 104 vorgesehen.

Der Drehmitnehmer 100 enthält vier in Umfangsrichtung einen Abstand voneinander aufweisende teilzylindrisch konvexe Zentrierabschnitte 106, die in eine grundkörperseitige Aufnahme 108 mit zu den Zentrierabschnitten 106 komplementären, teilzylindrischen konkaven Zentrierabschnitten 110 paßgenau eingreifen. Die Drehmitnahme erfolgt über die Flanken der zwischen je zwei konvexen Zentrierabschnitten 106 angeordneten, axial offenen Radialausnehmungen 112, in die je ein zwischen zwei benachbarten konkaven Zentrierabschnitten 110 des Grundkörpers 32 radial in die Aufnahme 108 überstehender Mitnehmerzahn 114 eingreift.

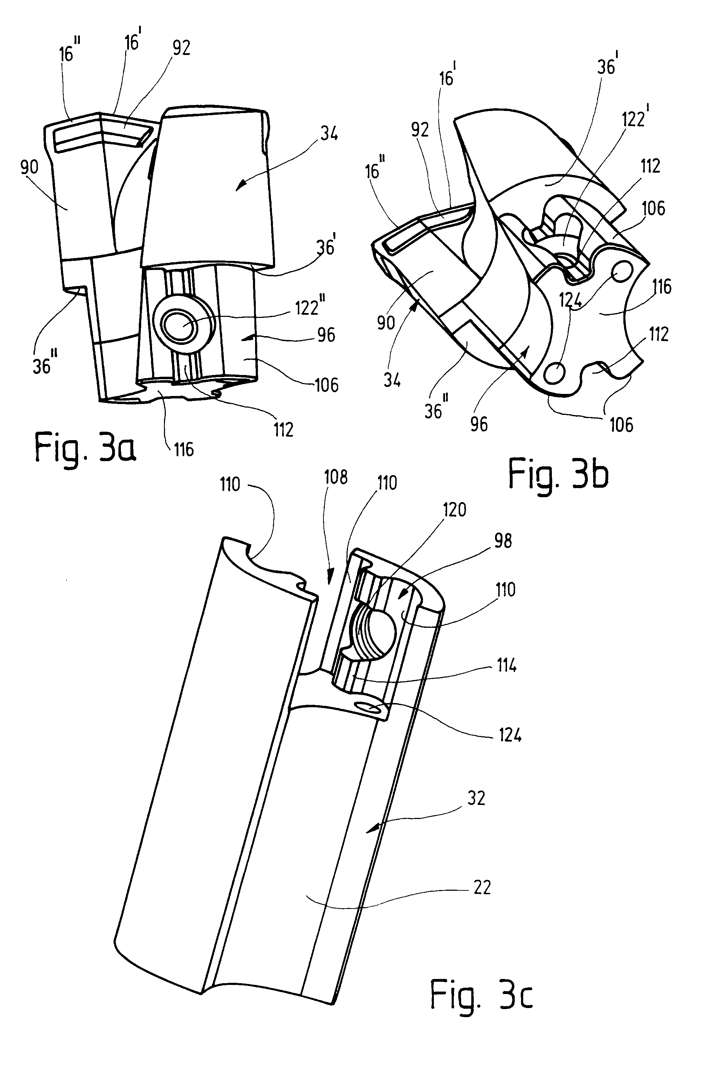

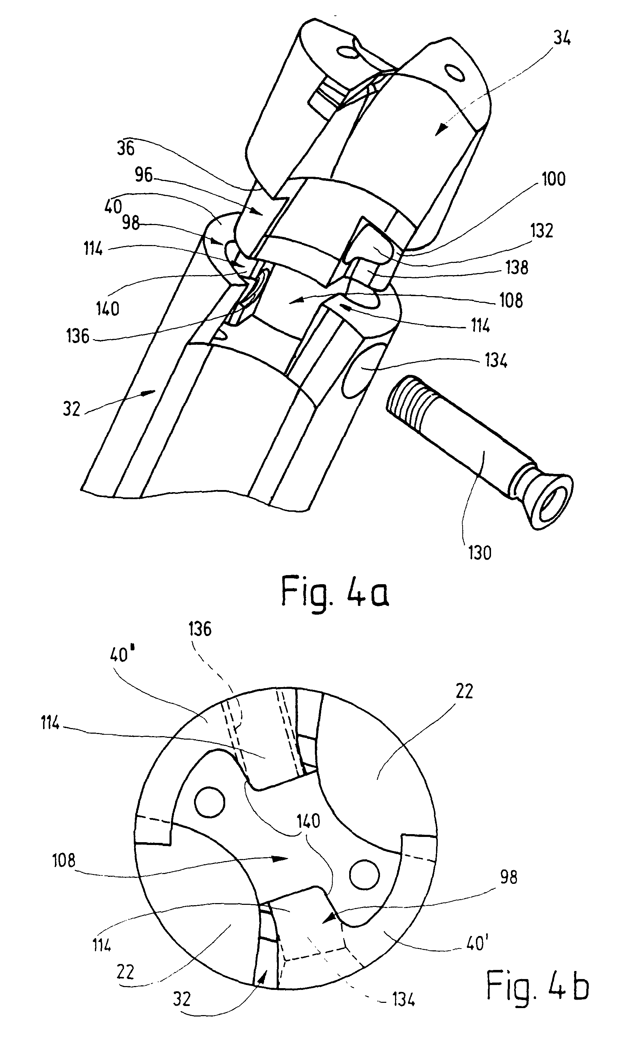

Die Wechselspitze weist eine radial über das Kupplungsteil 96 überstehende plane Schulterfläche 36 auf, die über einen auf den Verankerungszapfen 104 (Fig. 1 und 2) oder das Kupplungsteil 96 (Fig. 3 und 4) einwirkenden Spannmechanismus gegen eine plane Stirnfläche 40 des Grundkörpers 32 anpreßbar ist. Die Schulter- und Stirnflächen 36,40 sind in je zwei durch die Spannuten 22 in Umfangsrichtung voneinander getrennte Flächenpartien 36',36" sowie 40',40" unterteilt.

Der Spannmechanismus umfaßt eine beispielhaft in Fig. 4a dargestellte Spannschraube 130. Bei den in Fig. 1 bis 3 gezeigten Ausführungsbeispielen ist die Spannschraube in einer Gewindebohrung 120, 120' des Grundkörpers 32 angeordnet und greift mit einer Kegelspitze in eine exzentrische Konussenkung 122, 122' der Wechselspitze ein. Bei dem Ausführungsbeispiel nach Fig. 1 und 2 befindet sich die Konussenkung 122 in dem in der Aufnahmebohrung 102 befindlichen Verankerungszapfen 104, während bei dem Ausführungsbeispiel nach Fig. 3a bis c die Konussenkung 122' im Bereich einer der Radialausnehmungen 112 des Kupplungsteils angeordnet ist, während die Schraubbohrung 120' die Aufnahmewand im Bereich eines der Mitnehmerzähne 114 durchdringt.

Bei dem Ausführungsbeispiel nach Fig. 4a und b weist das Kupplungsteil 96 der Wechselspitze 34 eine durchgehende Querbohrung 132 auf, durch die eine durch eine durchgehende Senkbohrung 134 in einen grundkörperseitigen Mitnehmerteil 98,114 hindurchgeführte und in eine Gewindebohrung 136 des diametral gegenüberliegenden Mitnehmerteils 98,114 eingedrehte Senkkopfschraube 130 unter Erzeugung einer in axialer Richtung im Bereich der Planflächen 36, 40 und in Umfangsrichtung im Bereich der gegeneinander anliegenden Flanken 138,140 der Drehmitnehmer 100 und der Mitnehmerteile 98 spielfreien Verspannung zwischen Wechselspitze 34 und Grundkörper 32 hindurchgreift.

Weiter weist das Kupplungsteil 96 eine Planfläche 116 auf, die der Bodenfläche 118 der Aufnahme 108 zugewandt ist.

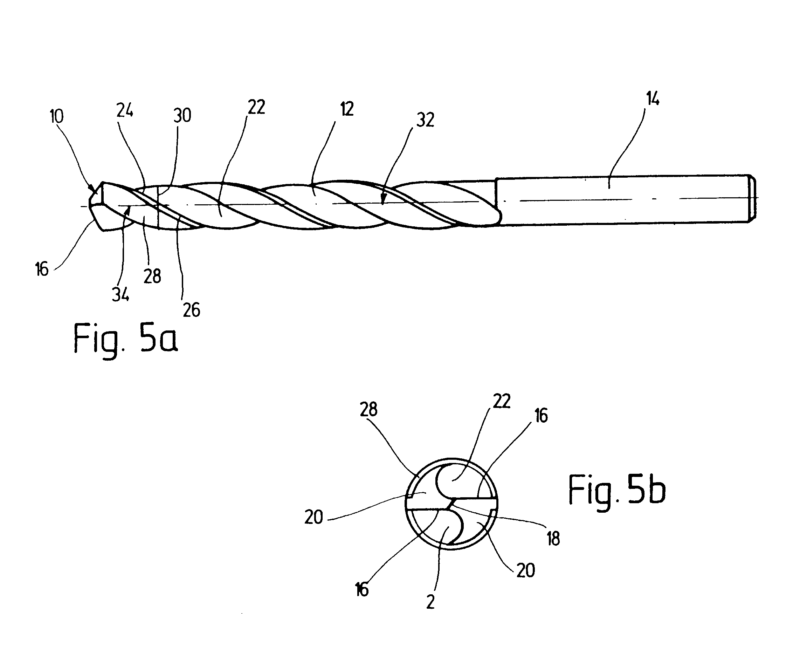

Der in Fig. 5a und b gezeigte Spiralbohrer weist eine Bohrerspitze 10, einen an die Bohrerspitze anschließenden Schneidteil 12 und einen rückwärtig am Schneidteil angeformten Bohrerschaft 14 auf. Die Bohrerspitze enthält zwei Hauptschneiden 16, eine die Hauptschneiden spitzenseitig miteinander verbindende Querschneide 18 und zwei an die Hauptschneiden und an die Querschneide anschließende Hauptfreiflächen 20. Von den Hauptschneiden 16 in der Bohrerspitze 10 aus erstrecken sich über den Schneidteil 12 zwei spiralige Spannuten 22, die seitlich durch eine Nebenschneide 24 mit anschließender Führungsfase 26 sowie durch eine Nebenfreifläche 28 begrenzt sind.

## Patentansprüche

1. Bohrwerkzeug mit einer Bohrerspitze (10), die zwei etwa gleiche Umfangsabstände voneinander aufweisende Hauptschneiden (16) und zwei an die Hauptschneiden angrenzende Spanflächen (90) und Hauptfreiflächen (20) aufweist, mit einem an die Bohrerspitze (10) axial anschließenden, gegebenenfalls als Schneidteil ausgebildeten Spanabfuhrteil (12), mit einem an dem der Bohrerspitze (10) gegenüberliegenden Ende des Spanabfuhrteils (12) angeordneten Bohrerschaft (14) und mit zwei sich von den Hauptschneiden (16) der Bohrerspitze (10) aus wendelförmig über den Spanabfuhrteil (12) erstreckenden Spannuten (22), wobei der Spanabfuhrteil (12) aus einem mit dem Bohrerschaft (14) einstückig verbundenen Grundkörper (32) und einer mit der Bohrerspitze (10) einstückig verbundenen Wechselspitze (34) besteht, die an einer axialen Trennstelle (30) form- und/oder kraftschlüssig miteinander verbindbar sind, wobei die Wechselspitze (34) in ihrer Gesamtheit aus einem härteren Werkstoff als der Grundkörper (32) besteht, wobei die Wechselspitze (34) mit einem nach der der Hauptfreifläche (20) gegenüberliegenden Seite überstehenden Kupplungsteil (96) einstückig verbunden ist, und das Kupplungsteil (96) mindestens zwei über den Umfang verteilt angeordnete, teilzylindrisch konvexe Zentrierabschnitte (106) aufweist, die in eine grundkörperseitige Aufnahme (108) mit zu den konvexen Zentrierabschnitten (106) komplementären, teilzylindrisch konkaven Zentrierabschnitten (110) paßgenau eingreifen, **dadurch gekennzeichnet, daß** das Kupplungsteil (96) einen mit einem komplementären Mitnehmerteil (98) des Grundkörpers (32) kämmenden Drehmitnehmer (100) aufweist.

2. Bohrwerkzeug nach Anspruch 1, **dadurch gekennzeichnet, daß** der Drehmitnehmer (100) mindestens eine zwischen zwei benachbarten konvexen Zentrierabschnitten (106) des Kupplungsteils (96) angeordnete, axial offene Radialausnehmung (112) für den Eingriff eines das Mitnehmerteil (98) bildenden, zwischen zwei benachbarten konkaven Zentrierabschnitten (110) des Grundkörpers (32) radial in die Aufnahme (108) überstehenden Mitnehmerzahn (114) aufweist.

3. Bohrwerkzeug nach Anspruch 1 oder 2, **dadurch gekennzeichnet, daß** das Kupplungsteil (96) einen achszentral über die Wechselspitze (34) überstehenden, in eine Aufnahmebohrung (102) des Grundkörpers (32) einführbaren und dort form- und/oder kraftschlüssig verankerbaren Verankerungszapfen (104) aufweist.

4. Bohrwerkzeug nach einem der Ansprüche 1 bis 3, **dadurch gekennzeichnet, daß** die Wechselspitze (34) eine im wesentlichen radial über das Kupplungsteil (96) überstehende plane Schulterfläche (36) aufweist, die vorzugsweise mittels eines Spannmechanismus gegen eine plane Stirnfläche (40) des Grundkörpers (32) anpreßbar ist.

5. Bohrwerkzeug nach Anspruch 4, **dadurch gekennzeichnet, daß** die Schulter- und Stirnflächen (36, 40) in je zwei durch die Spannuten (22) in Umfangsrichtung voneinander getrennte Flächenpartien (36', 36"; 40', 40") unterteilt sind.

6. Bohrwerkzeug nach einem der Ansprüche 1 bis 5, **dadurch gekennzeichnet, daß** in dem Kupplungsteil (96) mindestens eine im wesentlichen radial ausgerichtete konische Senkung (122') angeordnet ist, in die ein in einer grundkörperfesten, im wesentlichen radialen Gewindebohrung (120') angeordneter Gewindestift mit einer Kegelspitze form- und kraftschlüssig eingreift.

7. Bohrwerkzeug nach Anspruch 6, **dadurch gekennzeichnet, daß** die konische Senkung (122') in einen der Drehmitnehmer (100) des Kupplungsteils (96) eingeformt ist, und daß die Gewindebohrung (120') einen der Mitnehmerteile (114) des Grundkörpers (32) durchdringt.

8. Bohrwerkzeug nach einem der Ansprüche 1 bis 7, **dadurch gekennzeichnet, daß** das Kupplungsteil (96) der Wechselspitze (34) eine durchgehende Querbohrung (132) aufweist, durch die eine durch eine Durchgangsbohrung (134) des einen grundkörperseitigen Mitnehmerteils (98, 114) hindurchgeführte und in eine Gewindebohrung (136) eines gegenüberliegenden Mitnehmerteils (98, 114) eingedrehte Spannschraube (130) unter Erzeugung einer in axialer Richtung und in Umfangsrichtung spielfreien Verspannung zwischen Wechselspitze (34) und Grundkörper (32) hindurchgreift.

9. Bohrwerkzeug nach einem der Ansprüche 1 bis 8, **dadurch gekennzeichnet, daß** das Kupplungsteil (96) eine im wesentlichen radial über den Verankerungszapfen (104) überstehende Planfläche (116) aufweist, die vorzugsweise mittels eines Spannmechanismus gegen eine die Aufnahme (108) begrenzende Bodenfläche (118) anpreßbar ist.

10. Bohrwerkzeug nach einem der Ansprüche 1 bis 9, **dadurch gekennzeichnet, daß** die Wechselspitze (34) und der Grundkörper (32) an ihren zwischen Kupplungsteil (96) und Aufnahme (108) angeordneten Fügestellen miteinander laserverschweißt oder hartverlötet sind.

11. Bohrwerkzeug nach einem der Ansprüche 1 bis 10, **gekennzeichnet durch** mindestens eine den Grundkörper (32) und die Wechselspitze (34) durchdringende, die Trennstelle (30) überbrückende Kühlmittelbohrung (124).

12. Bohrwerkzeug nach einem der Ansprüche 1 bis 11, **dadurch gekennzeichnet, daß** der Grundkörper (32) und die Wechselspitze (34) voneinander abweichende Außendurchmesser aufweisen.

13. Bohrwerkzeug nach einem der Ansprüche 1 bis 12, **dadurch gekennzeichnet, daß** die Wechselspitze (34) aus einem Schneidstoff der Gruppe Hartmetall, Keramik oder verschleißfest beschichteter Werkzeugstahl besteht.

14. Bohrwerkzeug nach einem der Ansprüche 1 bis 13, **dadurch gekennzeichnet, daß** die Wechselspitze (34) als gesintertes Pulverspritzgußteil ausgebildet ist.

15. Bohrwerkzeug nach einem der Ansprüche 1 bis 14, **dadurch gekennzeichnet, daß** der Grundkörper (32) aus Werkzeugstahl oder einem Schnellarbeitsstahl besteht.

16. Bohrwerkzeug nach einem der Ansprüche 1 bis 15, **dadurch gekennzeichnet, daß** die Hauptschneiden (16) jeweils zwei in die Wechselspitze (34) eingeformte, paarweise dachförmig gegeneinander angestellte, im wesentlichen radial ausgerichtete Schneidkanten (16', 16") aufweisen.

17. Bohrwerkzeug nach Anspruch 16, **dadurch gekennzeichnet, daß** die Schneidkanten (16', 16'') der beiden Hauptschneiden (16) unter Bildung eines Doppelschneiders in gleichem Radialabstand von der Bohrerachse (78) angeordnet sind.

18. Bohrwerkzeug nach Anspruch 16 oder 17, **dadurch gekennzeichnet, daß** nur eine der beiden inneren Schneidkanten (16') die Bohrerachse (78) übergreift.

19. Bohrwerkzeug nach einem der Ansprüche 16 bis 18, **dadurch gekennzeichnet, daß** die radial über den Außenumfang der Bohrerspitze (10) überstehenden Schneidkantenecken (84) in eine im wesentlichen axial ausgerichtete Führungskante (86) übergehen.

20. Bohrwerkzeug nach Anspruch 19, **dadurch gekennzeichnet, daß** an die Führungskante (86) in Umfangsrichtung eine sich über einen Teilumfang der Bohrerspitze (10) erstreckende, radial über den Außenumfang überstehende Führungsrippe (88) angrenzt.

21. Bohrwerkzeug nach einem der Ansprüche 16 bis 20, **dadurch gekennzeichnet, daß** die Dachspitze (82) und die nach außen überstehenden Schneidkantenecken (84) der beiden Hauptschneiden (16) in gleichen Radialabständen der Bohrerachse (78) angeordnet sind.

22. Bohrwerkzeug nach einem der Ansprüche 16 bis 21, **dadurch gekennzeichnet, daß** die äußeren Schneidkanten (16'') der beiden Hauptschneiden (16) gleich lang und die inneren Schneidkanten (16') unterschiedlich lang sind.

23. Bohrwerkzeug nach einem der Ansprüche 16 bis 22, **dadurch gekennzeichnet, daß** die Schneidkanten mit einer senkrecht zur Bohrerachse (78) ausgerichteten Ebene einen Winkel von 2° bis 30°, vorzugsweise von 8° bis 16° einschließen.

24. Bohrwerkzeug nach einem der Ansprüche 16 bis 23, **dadurch gekennzeichnet, daß** die Schneidkanten (16', 16'') der Hauptschneiden (16) paarweise einen Dachwinkel von 120° bis 176°, vorzugsweise von 148° bis 164° einschließen.

25. Bohrwerkzeug nach einem der Ansprüche 16 bis 24, **dadurch gekennzeichnet, daß** die Schneidkanten (16', 16'') wellenförmig ausgebildet sind.

26. Bohrwerkzeug nach einem der Ansprüche 16 bis 25, **dadurch gekennzeichnet, daß** in die Spanflächen (90) vorzugsweise bis zu den Schneidkanten (16', 16'') reichende Eindellungen (94), Erhöhungen, Stufen, Rippen eingeformt sind.

27. Bohrwerkzeug nach einem der Ansprüche 16 bis 26, **dadurch gekennzeichnet, daß** die Schneidkanten zumindest partiell angefast und/oder verrundet sind.

28. Bohrwerkzeug nach einem der Ansprüche 1 bis 27, **dadurch gekennzeichnet, daß** die Wechselspitze (34) als eine Querschneide (18) aufweisende Spiralbohrerspitze ausgebildet ist.

29. Bohrwerkzeug nach einem der Ansprüche 16 bis 28, **dadurch gekennzeichnet, daß** in die Spanflächen (90) Spanformmulden (92) eingeformt sind, die vorzugsweise in axialem Abstand von den Schneidkanten (16', 16'') angeordnet sind.

30. Bohrwerkzeug nach Anspruch 29, **dadurch gekennzeichnet, daß** die Spanformmulden (92) zumindest an ihren schneidkantenseitigen Rändern einen der Dachform der Schneidkanten (16', 16'') angepaßten Randverlauf aufweisen.

31. Bohrwerkzeug nach einem der Ansprüche 1 bis 30, **dadurch gekennzeichnet, daß** die im wesentlichen achsparallelen, radial ausgerichteten Spanflächen (90) eine in Spanablaufrichtung in die Spanfördernuten (22) mündenden Spanraum begrenzen.

32. Bohrwerkzeug nach einem der Ansprüche 1 bis 31, **dadurch gekennzeichnet, daß** die Wechselspitze (34) mindestens eine im Bereich der Hauptfreiflächen (20) austretende, im wesentlichen achsparallele Kühlmittelbohrung (124) aufweist.

## Claims

1. A drilling tool, comprising a drill tip (10) which has two main cutting edges (16) positioned at approximately equal circumferential distances from each other, and two cutting faces (90) and front rakes (20) adjoining the main cutting edges, a chip removal part (12) which axially adjoins the drill tip and which may be formed to be a cutting part, a drill shank (14) which is positioned at the end of the chip removal part (12) opposing the drill tip (10), and two chip flutes (22) which extend in a helical manner over the chip removal part (12) starting at the main cutting edges (16) of the drill tip (10), wherein the chip removal part (12) consists of a base body (32) which is connected to the drill shank (14) as one part and an exchangeable tip (34) which is connected to the drill tip (10) as one part, which are connectable to each other in a form- and/or frictional-fitting manner at an axial separation point (30), wherein the exchangeable tip (34) as a whole consists of a material which is harder than the base body (32), wherein the exchangeable tip (34) is connected in one piece to a coupling piece (96) which protrudes over the side opposing the front rake (20), and wherein the coupling piece (96) has at least two partially cylindrical, convex centering sections (106) which are positioned distributed over the circumference and which fit exactly into a bushing (108) at the base body, which has partially cylindrical, concave centering sections (110) which are complementary to the convex centering sections (106), **characterized in that** the coupling piece (96) has a driver (100) which meshes with a complementary driving part (98) of the base body (32).

2. The drilling tool of claim 1, **characterized in that** the driver (100) has at least one axially open radial recess (112), which is positioned between two adjacent convex centering sections (106) of the coupling piece (96), for the engagement of a driver tooth (114) which radially protrudes into the bushing (108) between two adjacent concave centering sections (110) of the base body (32).

3. The drilling tool of one of claims 1 or 2, **characterized in that** the coupling piece (96) has an anchoring pin (104) which protrudes centrally over the exchangeable tip (34) and which can be inserted into the base body (32) and anchored there in a form- and/or frictional-fitting manner.

4. The drilling tool of one of claims 1 to 3, **characterized in that** the exchangeable tip (34) has a plane shoulder (36) which protrudes generally radially over the coupling piece (96), the shoulder (36) preferably being pressable against a plane face (40) of the base body (32) by means of a clamping mechanism.

5. The drilling tool of claim 4, **characterized in that** the shoulder (36) and face (40) are each subdivided into two areas (36', 36"; 40', 40") which are separated from each other in the circumferential direction by the flutes (22).

6. The drilling tool of one of claims 1 to 5, **characterized in that** at least one generally radially aligned conical countersink (122') is positioned in the coupling piece (96), a threaded bolt having a conical tip, which is positioned in a generally radial threaded bore (120') in the base body, being engaged in a form- and friction-fitting manner in the countersink.

7. The drilling tool of claim 6, **characterized in that** the conical countersink (122') is formed into one of the drivers (100) of the coupling piece (96), and that the threaded bore (120') penetrates one of the driving pieces (114) of the base body (32).

8. The drilling tool of one of claims 1 to 7, **characterized in that** the coupling piece (96) of the exchangeable tip (34) has a continuous cross bore (132), through which a clamping screw (130) extends, which is led through a bore (134) of the driving part (98, 114) of the base body and which is screwed into a threaded bore (136) of the opposing driving part (98, 114), by which a tensioning between the exchangeable tip (34) and the base body (32) without any free play in the axial and circumferential directions is created.

9. The drilling tool of one of claims 1 to 8, **characterized in that** the coupling piece (96) has an end face (116) which protrudes generally radially over the anchoring pin (104), the end face (116) being pressable against a bottom face (118) which delimits the bushing (108).

10. The drilling tool of one of claims 1 to 9, **characterized in that** the exchangeable tip (34) and the base body (32) are laser-welded or hard-soldered to each other at their joining locations which are positioned between the coupling piece (96) and the bushing (108).

11. The drilling tool of one of claims 1 to 10, **characterized by** a coolant bore (66) which penetrates the base body (32) and the exchangeable tip (34) and which bridges the separating point (30).

12. The drilling tool of one of claims 1 to 11, **characterized in that** the base body (32) and the exchangeable tip (34) have outer diameters which differ from one another.

13. The drilling tool of claim 1 to 12, **characterized in that** the exchangeable tip (34) consists of a cutting material from the group of hard metals, ceramics or tribologically resistant coated tool steels.

14. The drilling tool of claim 1 or 13, **characterized in that** the exchangeable tip (34) is formed to be a sintered powder injection molding part.

15. The drilling of claim 1 to 14, **characterized in that** the base body (32) consists of tool steel or a high-speed steel.

16. The drilling tool of one of claims 1 to 15, **characterized in that** the main cutting edges (16) each have two cutting edges (16', 16") which are formed into the exchangeable tip (34), sloped against each other in a roof shape, and aligned in a generally radial direction.

17. The drilling tool of claim 16, **characterized in that** the cutting edges (16', 16") of the two main cutting edges (16) are positioned in equal radial distances from the drill axis (78), forming a double cutter.

18. The drilling tool of one of claims 16 or 17, **characterized in that** only one of the two inner cutting edges (16') overlaps with the drill axis (78).

19. The drilling tool of one of claims 16 to 18, **characterized in that** the cutting edge corners (4) which protrude radially over the outer circumference of the drill tip (10) merge into generally axially aligned guide edges (86).

20. The drilling tool of claim 19, **characterized in that** a guide rib (88) which radially protrudes over the outer circumference and extends over part of the circumference of the drill tip (10) adjoins the guide edge (86) in the circumferential direction.

21. The drilling tool of one of claims 16 to 20, **characterized in that** the peak (82) and the outwardly protruding cutting edge corners (84) are positioned in equal radial distances from the drill axis (78).

22. The drilling tool of one of claims 16 to 21, **characterized in that** the outer cutting edges (16") of the two main cutting edges (16) are of equal length and the inner cutting edges (16') are of different length.

23. The drilling tool of one of claims 16 to 22, **characterized in that** the cutting edges and a plane which is perpendicular to the drill axis (78) include an angle of 2° to 30°, preferably of 8° to 16°.

24. The drilling tool of one of claims 16 to 23, **characterized in that** the pairs of cutting edges (16', 16") of the main cutting edges (16) include a roof angle of 120° to 176°, preferably of 148° to 164°.

25. The drilling tool of one of claims 16 to 24, **characterized in that** the cutting edges (16', 16") are formed to be wave-shaped.

26. The drilling tool of one of claims 16 to 25, **characterized in that** indentations (94), raised portions, steps, or ribs, which preferably reach the cutting edges (16', 16"), are formed into the cutting faces (90).

27. The drilling tool of one of claims 16 to 26, **characterized in that** the cutting edges are at least partially beveled and/or rounded-off.

28. The drilling tool of one of claims 1 to 27, **characterized in that** the exchangeable tip (34) is formed to be a helical drill tip having a chisel edge (18).

29. The drilling tool of one of claims 16 to 28, **characterized in that** chip forming hollows (92) are formed into the cutting faces (90), which are preferably positioned at an axial distance with respect to the cutting edges (16', 16").

30. The drilling tool of claim 29, **characterized in that** the chip forming hollows (92) have sides corresponding in shape to the roof-shape of the cutting edges (16', 16") at least at their sides adjoining the cutting edges.

31. The drilling tool of one of claims 1 to 30, **characterized in that** the cutting faces (90) which are generally axially parallel and radially aligned delimit a chip space which merges into the chip flutes (22) in the direction of chip travel.

32. The drilling tool of one of claims 1 to 31, **characterized in that** the exchangeable tip (34) has at least one coolant bore (124) which is generally parallel to the drill axis and exits in the region of the front rakes (20).

## Revendications

1. Outil de perçage, avec une pointe de foret (10) qui présente deux tranchants principaux (16) situés à des distances circonférentielles approximativement identiques l'un de l'autre et deux faces d'attaque (90) et faces de dépouille principales (20) limitrophes des tranchants principaux, avec une partie d'évacuation des copeaux (12) se raccordant axialement à la pointe de foret (10) et éventuellement conçue comme partie active, avec une queue de foret (14) disposée à l'extrémité de la partie d'évacuation des copeaux (12) qui est opposée à la pointe de foret (10), et avec deux rainures à copeaux (22) s'étendant en hélice sur la partie d'évacuation des copeaux (12) à partir des tranchants principaux (16) de la pointe de foret (10), la partie d'évacuation des copeaux (12) étant constituée d'un corps de base (32) solidaire de la queue de foret (14) et d'une pointe interchangeable (34) solidaire de la pointe de foret (10), qui peuvent être mutuellement assemblés par engagement positif et/ou à force en un point de séparation axial (30), la pointe interchangeable (34) étant constituée en totalité d'un matériau plus dur que le corps de base (32), la pointe interchangeable (34) étant solidaire d'une partie d'accouplement (96) dépassant vers le côté opposé à la face de dépouille principale (20), et la partie d'accouplement (96) présentant au moins deux segments de centrage (106) convexes en forme de cylindres partiels, disposés en étant répartis sur la circonférence, qui s'engagent en ajustement précis dans une partie réceptrice (108) du corps de base qui est dotée de segments de centrage (110) concaves en forme de cylindres partiels, complémentaires des segments de centrage convexes (106), **caractérisé en ce que** la partie d'accouplement (96) présente un entraîneur en rotation (100) qui engrène avec une partie entraîneuse complémentaire (98) du corps de base (32).

2. Outil de perçage selon la revendication 1, **caractérisé en ce que** l'entraîneur en rotation (100) présente au moins un évidement radial (112) ouvert axialement, disposé entre deux segments de centrage convexes (106) voisins de la partie d'accouplement (96), pour l'engagement d'une dent entraîneuse (114) constituant la partie entraîneuse (98), radialement saillante dans la partie réceptrice (108) entre deux segments de centrage concaves (110) voisins du corps de base (32).

3. Outil de perçage selon la revendication 1 ou 2, **caractérisé en ce que** la partie d'accouplement (96) présente un tenon d'ancrage (104) dépassant de la pointe interchangeable (34) en étant centré sur l'axe de celle-ci, qui peut être introduit dans un perçage récepteur (102) du corps de base (32) et y être ancré par engagement positif et/ou à force.

4. Outil de perçage selon l'une quelconque des revendications 1 à 3, **caractérisé en ce que** la pointe interchangeable (34) présente une face d'épaulement plane (36) dépassant essentiellement radialement de la partie d'accouplement (96), face qui peut être pressée, de préférence au moyen d'un mécanisme de serrage, contre une face frontale plane (40) du corps de base (32).

5. Outil de perçage selon la revendication 4, **caractérisé en ce que** la face d'épaulement (36) et la face frontale (40) sont respectivement divisées en deux faces partielles (36', 36" ; 40', 40") mutuellement séparées en direction circonférentielle par les rainures à copeaux (22).

6. Outil de perçage selon l'une quelconque des revendications 1 à 5, **caractérisé en ce qu'**au moins une fraisure conique (122') orientée essentiellement radialement est disposée dans la partie d'accouplement (96), fraisure dans laquelle s'engage positivement et à force, par une pointe conique, une vis sans tête disposée dans un perçage fileté (120') essentiellement radial du corps de base.

7. Outil de perçage selon la revendication 6, **caractérisé en ce que** la fraisure conique (122') est formée dans un des entraîneurs en rotation (100) de la partie d'accouplement (96), et **en ce que** le perçage fileté (120') traverse une des parties entraîneuses (114) du corps de base (32).

8. Outil de perçage selon l'une quelconque des revendications 1 à 7, **caractérisé en ce que** la partie d'accouplement (96) de la pointe interchangeable (34) présente un perçage transversal (132) traversant, à travers lequel s'engage une vis de serrage (130) traversant un perçage traversant (134) d'une des parties entraîneuses (98, 114) du corps de base et-vissée dans un perçage fileté (136) d'une partie entraîneuse opposée (98, 114), en produisant entre la pointe interchangeable (34) et le corps de base (32) un assemblage avec serrage sans jeu en direction axiale et en direction circonférentielle.

9. Outil de perçage selon l'une quelconque des revendications 1 à 8, **caractérisé en ce que** la partie d'accouplement (96) présente une face plane (116) dépassant essentiellement radialement du tenon d'ancrage (104), qui peut être pressée de préférence au moyen d'un mécanisme de serrage contre une face de fond (118) délimitant la partie réceptrice (108).

10. Outil de perçage selon l'une quelconque des revendications 1 à 9, **caractérisé en ce que** la pointe interchangeable (34) et le corps de base (32) sont mutuellement assemblés par soudage au laser ou par brasage fort en leurs points de joints disposés entre la partie d'accouplement (96) et la partie réceptrice (108).

11. Outil de perçage selon l'une quelconque des revendications 1 à 10, **caractérisé par** au moins un perçage de réfrigérant (124) traversant le corps de base (32) et la pointe interchangeable (34) et surmontant le point de séparation (30).

12. Outil de perçage selon l'une quelconque des revendications 1 à 11, **caractérisé en ce que** le corps de base (32) et la pointe interchangeable (34) présentent des diamètres extérieurs différents l'un de l'autre.

13. Outil de perçage selon l'une quelconque des revendications 1 à 12, **caractérisé en ce que** la pointe interchangeable (34) est constituée d'un matériau coupant du groupe des métaux durs, des matériaux céramiques ou des aciers à outils à revêtement résistant à l'usure.

14. Outil de perçage selon l'une quelconque des revendications 1 à 13, **caractérisé en ce que** la pointe interchangeable (34) est réalisée sous forme de pièce moulée par injection de poudre et frittée.

15. Outil de perçage selon l'une quelconque des revendications 1 à 14, **caractérisé en ce que** le corps de base (32) est réalisé en acier à outils ou en un acier rapide.

16. Outil de perçage selon l'une quelconque des revendications 1 à 15, **caractérisé en ce que** les tranchants principaux (16) présentent chacun deux arêtes de coupe (16', 16") formées dans la pointe interchangeable (34), orientées essentiellement radialement et inclinées l'une par rapport à l'autre en une paire en forme de toit.

17. Outil de perçage selon la revendication 16, **caractérisé en ce que** les arêtes de coupe (16', 16") des deux tranchants principaux (16) sont disposées à la même distance radiale de l'axe (78) du foret, en formant un outil de coupe à double tranchant.

18. Outil de perçage selon la revendication 16 ou 17, **caractérisé en ce qu'**une seule des deux arêtes de coupe intérieures (16') recouvre l'axe (78) du foret.

19. Outil de perçage selon l'une quelconque des revendications 16 à 18, **caractérisé en ce que** les coins (84) des arêtes de coupe qui dépassent radialement de la circonférence extérieure de la pointe de foret (10) se raccordent à une arête de guidage (86) orientée essentiellement axialement.

20. Outil de perçage selon la revendication 19, **caractérisé en ce qu'**une nervure de guidage (88), s'étendant sur une partie de la circonférence de la pointe de foret (10) et dépassant radialement de la circonférence extérieure, est limitrophe de l'arête de guidage (86) en direction circonférentielle.

21. Outil de perçage selon l'une quelconque des revendications 16 à 20, **caractérisé en ce que** le faîte (82) et les coins d'arêtes de coupe (84) dépassant vers l'extérieur des deux tranchants principaux (16) sont disposés à des distances radiales identiques de l'axe (78) du foret.

22. Outil de perçage selon l'une quelconque des revendications 16 à 21, **caractérisé en ce que** les arêtes de coupe extérieures (16") des deux tranchants principaux (16) sont de même longueur, et les arêtes de coupe intérieures (16') sont de longueurs différentes.

23. Outil de perçage selon l'une quelconque des revendications 16 à 22, **caractérisé en ce que** les arêtes de coupe forment un angle de 2° à 30°, de préférence de 8° à 16°, avec un plan orienté perpendiculairement à l'axe (78) du foret.

24. Outil de perçage selon l'une quelconque des revendications 16 à 23, **caractérisé en ce que** les arêtes de coupe (16', 16") des tranchants principaux (16) forment par paires un angle de toit de 120° à 176°, de préférence de 148° à 164°.

25. Outil de perçage selon l'une quelconque des revendications 16 à 24, **caractérisé en ce que** les arêtes de coupe (16', 16") sont réalisées ondulées.

26. Outil de perçage selon l'une quelconque des revendications 16 à 25, **caractérisé en ce que** des creusements (94), des bossages, des gradins, des nervures, s'étendant de préférence jusqu'aux arêtes de coupe (16', 16"), sont formés dans les faces d'attaque (90).

27. Outil de perçage selon l'une quelconque des revendications 16 à 26, **caractérisé en ce que** les arêtes de coupe sont au moins partiellement chanfreinées et/ou arrondies.

28. Outil de perçage selon l'une quelconque des revendications 1 à 27, **caractérisé en ce que** la pointe interchangeable (34) est réalisée sous forme de pointe de foret hélicoïdal présentant un tranchant transversal (18).

29. Outil de perçage selon l'une quelconque des revendications 16 à 28, **caractérisé en ce que** des cuvettes de formation de copeaux (92), qui sont de préférence disposées à distance axiale des arêtes de coupe (16', 16"), sont formées dans les faces d'attaque (90).

30. Outil de perçage selon la revendication 29, **caractérisé en ce que** les cuvettes de formation de copeaux (92) présentent, au moins sur leurs bords situés du côté des arêtes de coupe, une allure des bords adaptée à la forme de toit des arêtes de coupe (16', 16").

31. Outil de perçage selon l'une quelconque des revendications 1 à 30, **caractérisé en ce que** les faces d'attaque (90), orientées radialement et essentiellement parallèles à l'axe, délimitent un logement de copeaux qui débouche, dans la direction d'évacuation des copeaux, dans les rainures de transport de copeaux (22).

32. Outil de perçage selon l'une quelconque des revendications 1 à 31, **caractérisé en ce que** la pointe interchangeable (34) présente au moins un perçage de réfrigérant (124) essentiellement parallèle à l'axe, débouchant dans la région des faces de dépouille principales (20).
